# EUROPEAN PATENT APPLICATION

(11) **EP 2 637 415 A2**
(43) Date of publication of application: **11.09.2013**
(21) Application number: 13157813.0
(22) Date of filing: 05.03.2013
(51) Int. Cl.: H04N 21/41, H04N 21/414, H04N 21/4363, H04N 21/4788

(54) **Source device and method for selectively displaying an image**

(30) Priority: 08.03.2012 KR 20120023831; 07.12.2012 EP 12196111
(71) Applicant: Pantech Co., Ltd., Seoul 121-792 (KR)
(72) Inventor: Kim, Ki Nam, 121-792 Seoul (KR)
(74) Representative: Jordan, Volker Otto Wilhelm

(57) **Abstract**

A method for selective image distribution using a processor includes determining whether an image includes a non-display image layer and a display image layer; and generating, using the processor, a share image by synthesizing the display image layer. A device includes a layer configuring unit to determine whether an image includes a non-display image layer and a display image layer, and a layer synthesizing unit to synthesize the display image layer to generate a share image.

## Description

### CROSS-REFERENCE TO RELATED APPLICATION

This application claims priority from and the benefit under 35 U.S.C. §119(a) of Korean Patent Application No. 10-2012-0023831, filed on March 8, 2012, the entire disclosure of which is incorporated herein by reference for all purposes.

### BACKGROUND

FIELD

The following description relates to an apparatus and a method for displaying information of a source device on a sink device.

DISCUSSION OF THE BACKGROUND

With the development of electronic and communication technology, technology using wireless communication may be widely used in various industries including a service field, as well as a communication field. Accordingly, various services, such as voice phone call, data transmission, and Internet may be provided using a wireless communication network. As wireless communication technology using such wireless communication network includes, without limitation, Wireless Broadband Internet (WiBro), Wireless Fidelity (Wi-Fi), and the like.

The Wi-Fi may use a near field wireless communication technology based on an IEEE 802.11 standard, in which wireless technology may be grafted on a High Fidelity (Hi-Fi) network, and may use a wireless Local Area Network (LAN) technology to perform high-performance wireless communication. The wireless LAN technology may use a method for constructing a network using radio waves, light, or the like without the use of wires to provide a network communication.

When the Wi-Fi technology is used, a mobile computer, such as a laptop computer can be used through a wireless connection. In addition, when the Wi-Fi technology is used, a plurality of personal computers (PCs) may be connected, and it may be possible to transmit large data files, graphic images, video files, and audio files among the PCs connected through the Wi-Fi technology. A wireless service using the Wi-Fi technology or a Wi-Fi service may support a data transmission rate up to 11 megabits per second (Mbps), and may be used at various locations, including home, workplace, or other locations that may be located within a radius of 500 m from a source terminal providing the Wi-Fi service.

Various smart phones, as well as mobile computers, such as laptop computers or tablet computers may be manufactured to be capable of using a Wi-Fi service. Further, the smart phone may be used with a PC to access the Wi-Fi service using the smart phone.

When an application program or other information of a source device is displayed on a sink device, in which the smart phone may be the source device and the PC may be the sink device, the sink device may receive an image or other information displayed on the source device and displays the received image or the information on the screen of the sink device.

Accordingly, the sink device may display the same image or information as the image or information displayed by the source device. Various application programs may be executed in a mobile terminal, such as a smart phone, based on characteristics of the mobile terminal, and a specific event, such as Short Message Service (SMS), may be generated. While the same image or information may be displayed on both the source device and the sink device, there may be a problem in that a user may not want all of the images or information thereof to be displayed on both devices.

### SUMMARY

Exemplary embodiments of the present invention provide an apparatus and a method for displaying information of a source device on a sink device.

Additional features of the invention will be set forth in the description which follows, and in part will be apparent from the description, or may be learned by practice of the invention.

Exemplary embodiments of the present invention provide a method for selective image distribution using a processor including determining whether an image includes a non-display image layer and a display image layer, and generating, using the processor, a share image by synthesizing the display image layer.

Exemplary embodiments of the present invention provide a device including a layer configuring unit to determine whether an image includes a non-display image layer and a display image layer, and a layer synthesizing unit to synthesize the display image layer to generate a share image.

Exemplary embodiments of the present invention provide a method for selective image distribution using a processor including loading an image provided by a source device as a plurality of image layers, determining whether the plurality of image layers include a non-display item, registering the image layer including the non-display item as a non-display image layer, synthesizing, using the processor, non-registered image layers for generating a share image, and transmitting the share image to a sink device.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating a conventional hierarchy structure of a window manager and a view system.

FIG. 2 is a flowchart illustrating a conventional image sharing method.

FIG. 3 is a diagram illustrating a result of a conventional image sharing method.

FIG. 4 is a diagram illustrating a conventional generation of Moving Picture Experts Group (MPEG) data using a Wireless Fidelity (Wi-Fi) service.

FIG. 5 is a diagram illustrating a schematic configuration of a selective image sharing system according to an exemplary embodiment of the present invention.

FIG. 6 is a diagram illustrating a detailed configuration of a control unit of a source device according to an exemplary embodiment of the present invention.

FIG. 7 is a concept diagram illustrating a surface flinger operation process according to an exemplary embodiment of the present invention.

FIG. 8 is a concept diagram illustrating a process of generating a share image in a source device and transmitting the share image to a sink device according to an exemplary embodiment of the present invention.

FIG. 9 is a flowchart illustrating a method for displaying an image or information of a source device on a sink device by the source device according to an exemplary embodiment of the present invention.

FIG. 10 is a flowchart illustrating a method for generating a main image and a share image of a source device according to an exemplary embodiment of the present invention.

FIG. 11 is a flowchart illustrating a method for registering a non-display item according to an exemplary embodiment of the present invention.

FIG. 12 is a flowchart illustrating a method for distinguishing a display layer from a non-display image layer in a source device according to an exemplary embodiment of the present invention.

FIG. 13 is a flow diagram illustrating a method for classifying an image layer as a non-display image layer of a source device according to an exemplary embodiment of the present invention.

FIG. 14 is a concept diagram illustrating items included in a plurality of image layers that are used to generate a main image according to an exemplary embodiment of the present invention.

FIG. 15 is a concept diagram illustrating items included in a plurality of image layers that are used to generate a main image according to an exemplary embodiment of the present invention.

FIG. 16 and FIG. 17 are diagrams illustrating a selective display of different images on a source device and a sink device according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

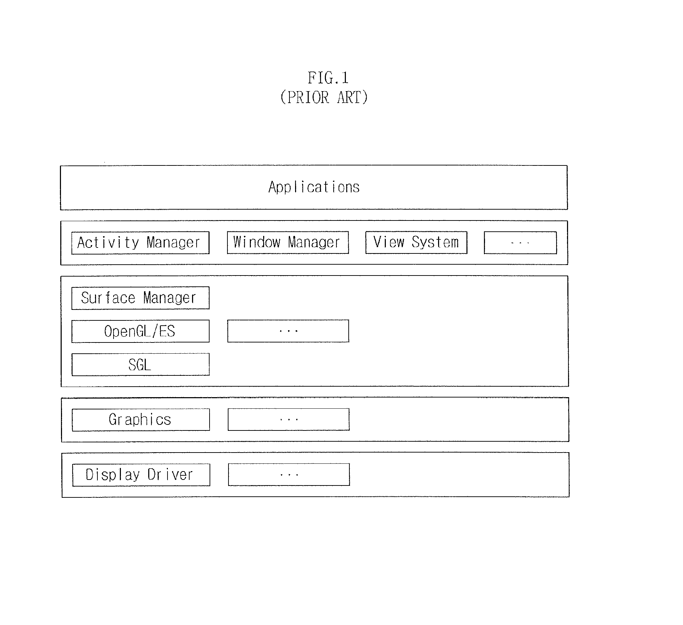

FIG. 1 is a diagram illustrating a conventional hierarchy structure of a window manager and a view system.

Terminals, such as smart phones may be widely and used. For example, an image or information displayed on a screen of a small terminal, such as a smart phone, may be shared with or displayed on a screen of a larger external terminal, such as a television (TV) or an electronic computer monitor. Referring to FIG. 1, a viewing system under an application stage may be comprehensively managed by a window manager. Generated raw image data may be outputted from a display driver unit to a first terminal (i.e., a source device) to be displayed on the first terminal, and/or the generated raw data of the first terminal may be transformed into a frame image that may be temporarily stored in a frame buffer to be transmitted to a second terminal (i.e., a sink device).

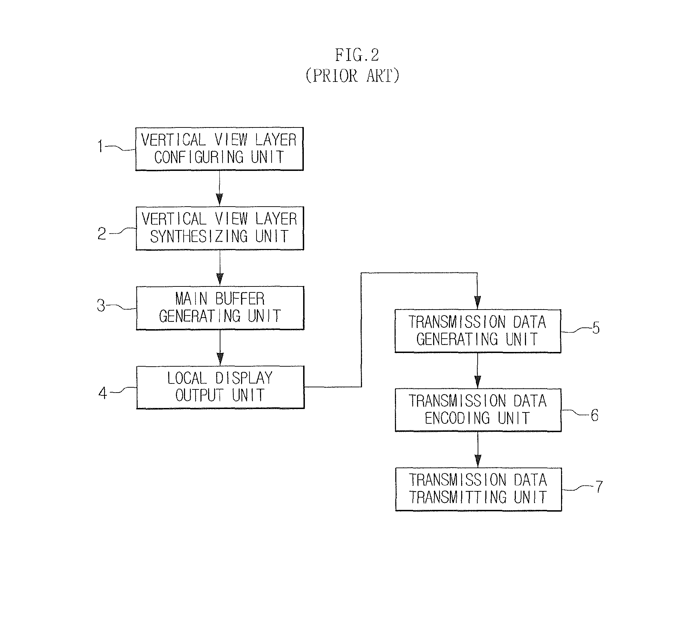

FIG. 2 is a flowchart illustrating a conventional image sharing method.

Further, to share an image or information displayed on a screen of a source device with a sink device, a method of FIG. 2 for sharing an image or information displayed on the screen of the source device may be used. Referring to FIG. 2, image layers of the source device may be configured by a vertical image layer configuring unit 1. The image layers may then be synthesized by a vertical image layer 2. The image or information to be displayed may be stored on a main buffer generating unit 3 and outputted to a local or main display output unit 4 of the source device to display the image or information on the source device. The image or information to be transmitted to the sink device may be generated by a transmission data generating unit 5. The image or information may be encoded by a transmission data encoding unit 6, and then transmitted to the sink device through a transmission data transmitting unit 7.

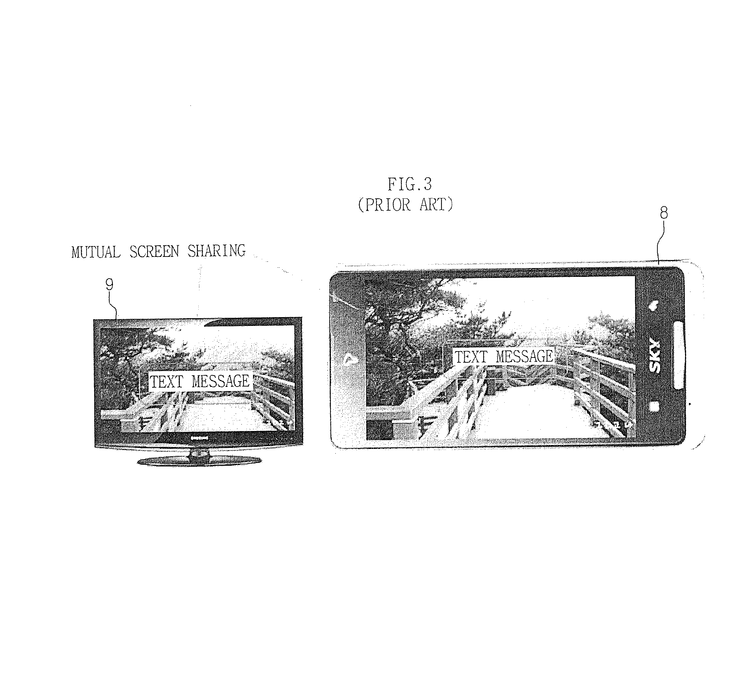

FIG. 3 is a diagram illustrating a result of a conventional image sharing method.

Referring to FIG. 3, when the method of FIG. 2 is used, the same image or information may be shared between the source device 8 and the sink device 9. Referring to FIG. 3, while a specific picture is shared as intended, a text message popup window displaying message content may be intended only for the source device 8. However, both the respective picture and the text message popup window may be displayed on both the source device 8 and the sink device 9. The content of the same text message may be displayed on the sink device 9 as well as the source device 8. When the image or information which was not intended to be shared is distributed, a problem of privacy infringement may occur.

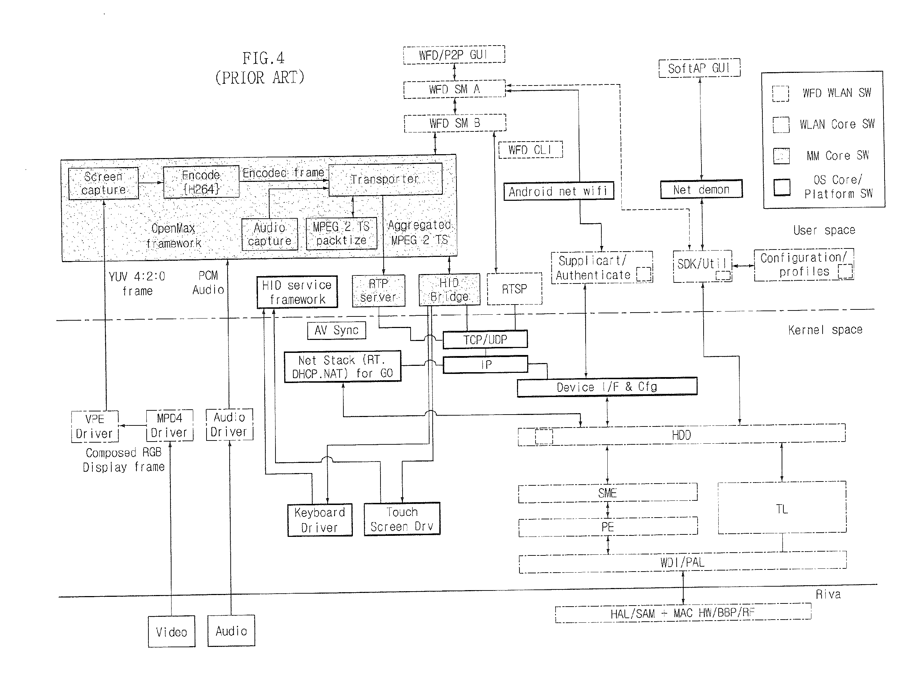

FIG. 4 is a diagram illustrating a conventional generation of Moving Picture Experts Group (MPEG) data generation using a Wi-Fi service.

When a conventional source device shares an image or information displayed on the conventional source device with a sink device using a Wi-Fi service, the same image or information displayed on the source device may be transmitted to the sink device.

Referring to FIG. 4, when video data is inputted, video data may be configured through a video driver. Further, the video data may be generated by synthesizing video data layers having a plurality of vertical structures. The generated video data may be captured and then encoded into transmission data (e.g., MPEG data), and transmitted to a transmission unit.

In the related art, the video data captured in such a manner may be displayed on a first terminal or a source device, and the video data may be encoded and transmitted to a second terminal or a sink device. Accordingly, the same video data may be displayed on both the source device and the sink device.

To solve such a problem, exemplary embodiments of the present invention adopts a method in which a buffer unit for generating and holding a first image or information of the source device for transmission to the sink device, and a buffer unit for generating and holding a second image or information to be displayed on the source device may be separately be configured. Further, a modified display excluding an image layer selected by the user in the vertical screen layer may be stored in the buffer, may be captured and separately transmitted.

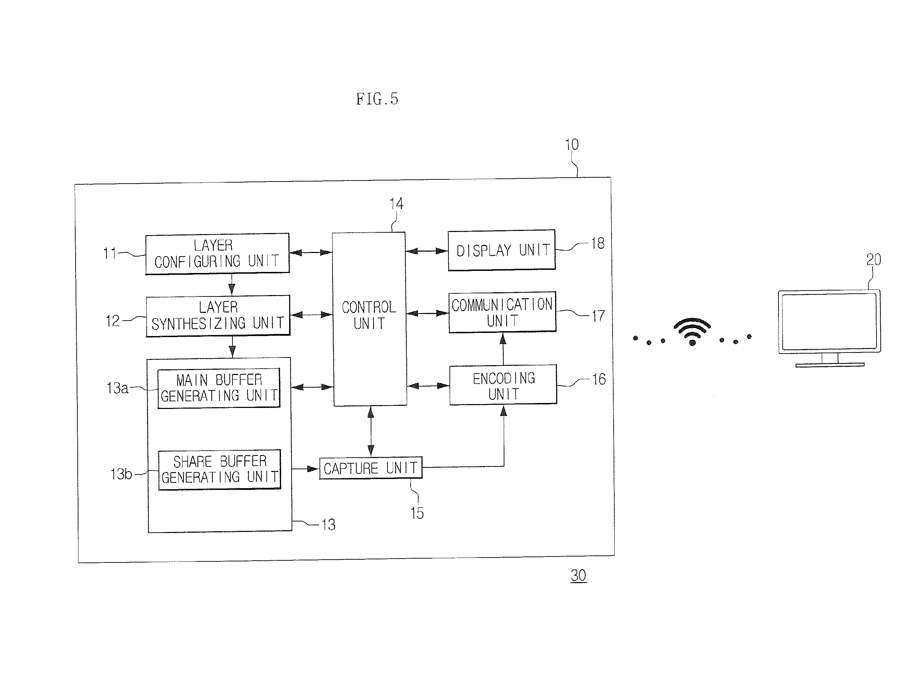

Hereinafter, a configuration and an operation of a selective image or information sharing system according to an exemplary embodiment of the present invention will be described in detail with reference to FIG. 5.

A source device and a method for displaying an image or information of a source device on a sink device according to exemplary embodiments of the present invention will be described in more detail with reference to the accompanying drawings. The accompanying drawings and the following description are exemplary, and the source device and the method described herein are not limited thereto.

FIG. 5 is a diagram illustrating a schematic configuration of the selective image sharing system according to an exemplary embodiment of the present invention.

Referring to FIG. 5, the selective image sharing system 30 includes a source device 10 and a sink device 20 connected to the source device 10 through a wireless local area network (LAN) such as a Wi-Fi network.

The source device 10 may include, without limitation, a smart phone, a tablet computer, a net book, a personal digital assistant (PDA), a portable media player (PMP), and other types of mobile computers connectable to the Internet. The source device 10 may execute various application programs with respect to an operating system (OS).

The OS may refer to a system program that may be used to enable an application program to use various hardware components of a computing device. The OS may include various computer-mountable operating systems, such as Android® OS, i-OS®, Window Mobile® OS, Bada® OS, Symbian® OS, and Blackberry® OS.

As application programs become developed to perform a specific work operation using the computer, the application program may include various multimedia contents, such as a game, a movie, a music file, and a picture. The application program may also include an execution program, such as an image viewer and a movie player to execute the multimedia contents, as well as various applications.

The sink device 20 may include various communication devices that may communicate with the source device 10 through a wireless LAN, without limitation, a desktop computer, a tablet computer, a smart television (TV), and a mobile computer. The sink device 20 may receive and display frame data provided from the source device 10 to display the application program executed in the source device 10.

The source device 10 and the sink device 20 include a platform supporting a wireless LAN communication, and may communicate with each other through the wireless LAN. The wireless LAN communication may refer to a communication technology in which it may be possible to support data transmission and reception within a predetermined range of distance using electric waves or infrared rays without the use of wires. The wireless LAN communication may include near field wireless communication technology, such as Wi-Fi.

The source device 10 includes a layer configuring unit 11, a layer synthesizing unit 12, a buffer generating unit 13, a control unit 14, a capture unit 15, an encoding unit 16, a communication unit 17, and a display unit 18.

The layer configuring unit 11 may configure one or more image layers that may be used in forming an image or information, such as an image using video data. The layer configuring unit 11 may determine whether an image provided in the source device 10 includes one or more image layers that may be configured as a non-display image layer. As described above, the image may be generated by synthesizing two or more image layers, which may have a plurality of vertical structures. Further, the synthesizing of the multiple layers having plurality of vertical may be performed by one or more execution application included in the source device 10. Here, the image may, without limitation, refer to or include at least one of a graphical image, a moving picture, a text message, a control mechanism, and the like.

In the specification, the application described may include, without limitation, to various types of execution application programs driven on the platform of the source device 10. As some or all of the applications executed on the OS may include applications separately downloaded and installed by the user, as well as essential applications preloaded or pre-installed in the source device 10.

As described above, the OS, which may drive the source device, may include various types of OS, such as Android® OS, i-OS® of Apple Co., Ltd, Windows Mobile® OS, Bada® OS, Symbian OS®, and Blackberry® OS. However, the description will be described as if the source drive is driven by the Android® OS, however, it will be understood that the aspects of the invention are not limited thereto.

The image layers configured by the layer configuring unit 11 may include some or all image layers including image layers corresponding to a specific application. In addition, the image layers may include one or more layers of a plurality of image layers that may be used in displaying an image or information corresponding to an application provided in the source device 10. When a user interface (UI) corresponding to a plurality of applications is displayed on the screen of the source device 10, an UI corresponding to the specific application may be excluded. However, when the UI corresponding to the specific application is displayed on the screen, a specific image layer of the image layers constituting the UI of the application may be excluded. An example relating thereto will be described more in detail below.

The layer synthesizing unit 12 may synthesize one or more layers of the shared image configured by the layer configuring unit 11. The layer synthesizing unit 12 may synthesize the layers differently based on whether an image provided by an application in the source device is a main image or the shared image. In an example, a main image or a first image may refer to an image that may be displayed on the source device 10, and the shared image or a second image may refer to an image that may be transmitted to a sink device 20. The shared image may be transmitted to the sink device according to a control of the control unit 14, which will be described in more detail below.

The buffer generating unit 13 may temporarily store the images generated in the layer synthesizing unit 12, including the main image and the shared image. The buffer generating unit 13 may temporarily store the images according to a control of the control unit 14. The buffer generating unit 13 includes a main buffer generating unit 13a or a first buffer generating unit that may store the main image to be displayed on the source device 10, and a share buffer generating unit 13b or a second buffer generating unit that may store the share image to be transmitted to the sink device 20.

The capture unit 15 may capture an instance of at least one of the main image and the share image stored in the buffer generating unit 13. The captured instances of the main image and the share image may be transmitted to the control unit 14 and the encoding unit 16.

The encoding unit 16 may encode the share image transmitted from the capture unit 15 into a data format to be transmitted to the sink device according to a command of the control unit 14. For example, the encoding unit 16 may encode the transmitted share image into a corresponding data format, such as an MPEG data format.

The communication unit 17 may transmit and/or receive data to and from the sink device 20 in a wireless LAN, and may transmit the share image encoded in the encoding unit 16 to the sink device 20 according to a command of the control unit 14. For example, the communication unit 17 may transmit the encoded share image through a Real-Time Transport Protocol (RTP).

The display unit 18 may display and provide various images on a screen of the source device. The main image transmitted from the capture unit 15 may be displayed according to a command of the control unit 14 to show the main image to the user.

The control unit 14 may control various operations of the source device 10 while transmitting and/or receiving the data to and from the sink device or other external device. The control unit 14 may determine one or more image layers configured by the layer configuring unit 11 as a non-display image layer based on an input command provided the user. Further, the control unit 14 may generate the main image using the layer synthesizing unit 12 and store the main image in the main buffer generating unit 13a. The control unit 14 may also generate the share image using the layer synthesizing unit 12 and store the share image in the share buffer generating unit 13b. The control unit 14 may synthesize some or all image layers configured by the layer configuring unit 11 to generate the main image and store the main image in the main buffer generating unit 13a. In addition, the control unit 14 may synthesize the image layers except for the determined non-display image layer to generate the share image. The control unit 14 may store the share image in the share buffer generating unit 13b.

When the image data is generated as described above, the capture unit 15 may capture a video image, and transmit the video image to the control unit 14 and the encoding unit 16. The control unit 14 may provide the main image to the user through the display unit 18 without separate encoding. In addition, the control unit 14 may encode the share image to be transmitted to the sink device 20 into an appropriate data format, such as the MPEG data format, through the encoding unit 16. Further, the control unit 14 may transmit the share image to the sink device 20 using a data communication protocol, such as the RTP protocol, through the communication unit 17. Further, the share image transmitted to the sink device 20 may have similar information as the main image except for the non-display image layer that was selected to be removed by the user as described above, and thus it may be possible to protect privacy or the like of the user. However, aspects of the invention are not limited thereto, such that the removal of the non-display image layer from the plurality of image layers to generate a share image may be performed automatically in response to a predetermined condition. For example, the non-display image layer may be removed when the non-display image layer is determined to include sensitive information, or in response to execution of a reference application.

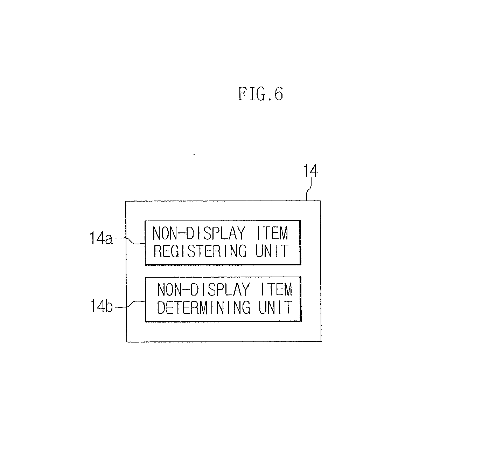

FIG. 6 is a diagram illustrating a detailed configuration of the control unit 14 of the source device 10 according to an exemplary embodiment of the present invention. The control unit 14 includes a non-display item registering unit 14a and a non-display item determining unit 14b.

The non-display item registering unit 14a may receive an input of a non-display item from the user or the source device 10. An UI that may be used to select the non-display item, which may not to be displayed at the time of transmission to the sink device 20, among specific applications or subordinate items of the specific applications displayed on the display unit 18. The non-display item may be set according to an input of the user using the UI. Accordingly, the image layers including the non-display item may be registered as a non-display image layer, and the non-registered layers or image layers not including the non-display item may be synthesized to generate a share image. Further, the non-display item may be set automatically based on meeting a predetermined condition, in response to receiving a command from an external device, and the like.

When the source device 10 transmits the share image to the sink device 20 to display an image or information provided by the sink device 20, the non-display item determining unit 14b may determine whether the image layers constituting the share image displayed on the sink device 10 includes an item which may be determined to be a non-display item. The determination may be performed by comparing the image layers constituting the main image displayed on the source device 10 with the item set by the non-display item registering unit 14a. The control unit 14 may configure the main image to be stored in the main buffer generating unit 13a and the share image to be stored in the share buffer generating unit 13b according to the determination.

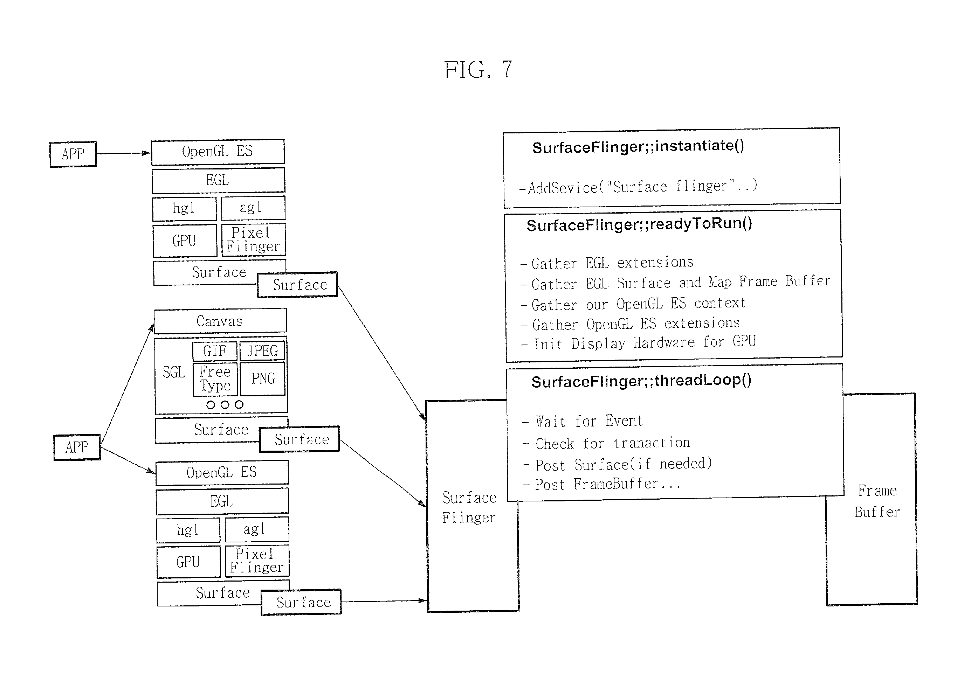

Fig. 7 is a concept diagram illustrating a surface flinger operation process according to an exemplary embodiment of the present invention.

The surface flinger may refer to a component that may gather up data and throwing the data to the output side. The surface flinger may gather up various types of surface data and may update the data to a frame buffer. The surface flinger may also have a main operation of mixing the surfaces.

Referring to FIG. 7, the surface flinger may collect the surfaces for one or more applications, generate data to configure the collected surface to be displayed on the screen, and store the data in the frame buffer.

The contents shown at the box part of FIG. 7 may correspond to the contents included in a general method used in the Android® platform. Some of the features will be described in more detail below.

The "Surfaceflinger::instantiate" part may correspond to a service registration part for using the surface flinger, and the "Surfaceflinger::readyToRun" part may correspond to an initialization process, which may include a process of initializing a main display, a process of initializing Open Graphic Library for Embedded Systems (OpenGL ES), and the like. The initialization processes described herein includes the following.
1) Open Graphic Library (EGL) Initialization by Obtaining Display Information
2) Surface Generation
3) Context Generation of OpenGL ES
4) Extension Information Acquisition of Open ES
5) Store Generated Contents
6) Hardware Module Initialization

The OpenGL ES may refer to a 3 dimensional (3D) Graphics Application Programming Interface (API) produced for a mobile embedded apparatus. The EGL may provide a method for drawing a picture by client API, such as OpenGL ES and Open Vector Graphics (OpenVG), generating graphic context, and generating a rending surface capable of synthesizing the contents drawn by the client API as well as native platform rendering API.

The "Surfaceflinger::threadLoop" part may refer to performing a posting operation in which, when the surface flinger initialization is completed, threads continuously mixes the surfaces by rotation and updated in the frame buffer.

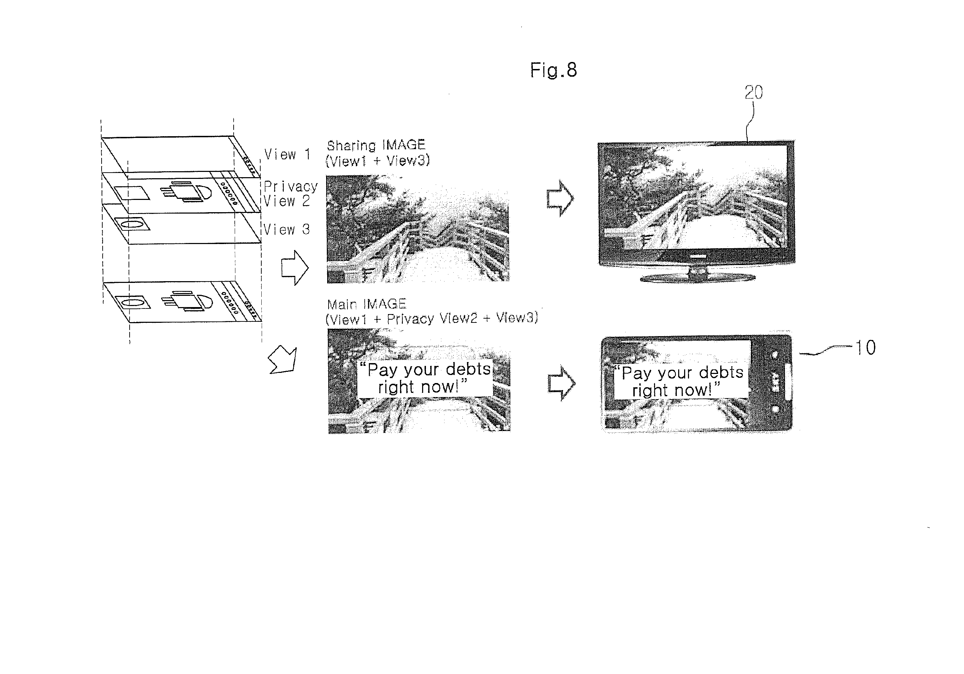

FIG. 8 is a concept diagram illustrating a process of generating a share image in the source device 10 and transmitting the share image to the sink device 20 according to an exemplary embodiment of the present invention.

As shown in FIG. 8, a plurality of image layers constituting a main image and a share image. View 1 and View 3 are image layers that may be synthesized to form the share image, which is transmitted to the sink device 20 to be displayed. Privacy View 2 may be an image layer including non-display item, such as the text message displayed in FIG. 8, which may be synthesized with View 1 and View 3 to form a main image. Accordingly, Privacy View 2 image layer may not be included in the share image and may not to be transmitted to the sink device 20.

The main buffer may store the View 1 image layer, Privacy View 2 image layer, and View 3 image layer, which may be synthesized to form a main image to be displayed on the source device 10. The share buffer may store the View 1 image layer, and View 3 image layer, which may be synthesized to form a share image to be transmitted to the sink device, and displayed thereon. In another embodiment, as illustrated in Fig. 4, when the image layers are inputted to a video driver, the image layers may be captured and then encoded into transmission data, and transmitted to a transport unit. Then, View 1, View 2 and View 3 image layers may be captured by the main buffer to be transmitted to the source device 10, View 1 and View 3 image layers may be captured by the share buffer to be transmitted to the sink device 20. A text message popup of "Pay your debts right now!" may be displayed on the source device 10, but such text message popup is excluded in the sink device 20. However, aspects of the invention are not limited thereto, such that various combinations of image layers may be synthesized to generate a customized image that may be provided to a specific recipient. For example, View 1 image layer and View 2 image layer may be synthesized to generate a first customized image, View 1 image layer and View 3 image layer may be synthesized to generate a second customized image, and View 2 image layer and View 3 image layer may be synthesized to generate a third customized image, in which the three customized images may be transmitted to three different devices to provide a different image in each of the three devices.

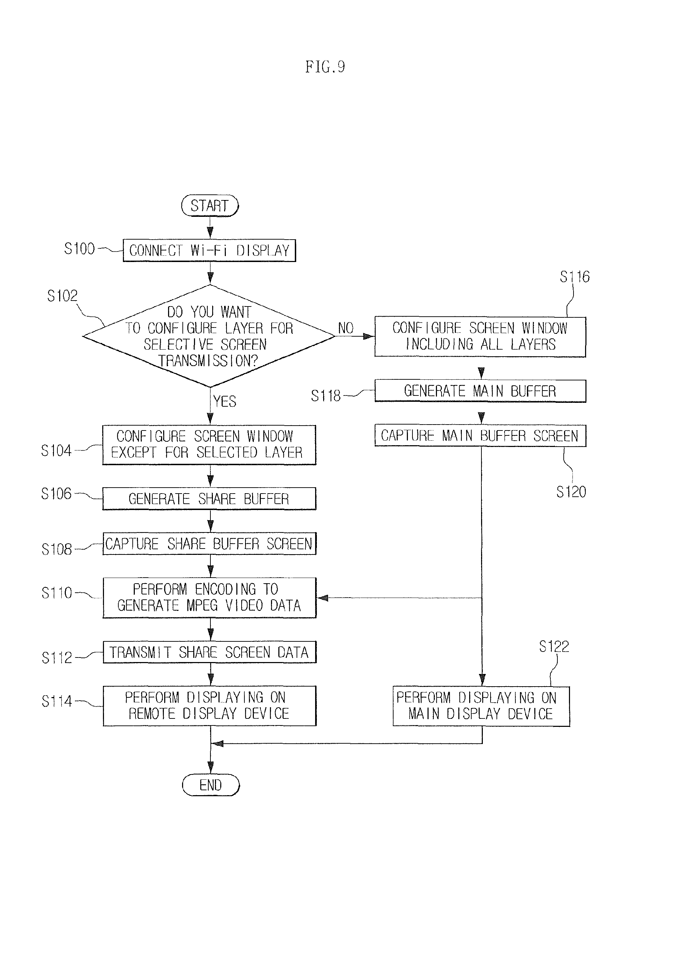

FIG. 9 is a flowchart illustrating a method for displaying an image or information of a source device on the sink device by the source device according to an exemplary embodiment of the present invention. The method of FIG. 9 below will be described as if performed by the sink device 10 of FIG. 5, but is not limited thereto.

Referring to FIG. 9, in operation 100, the source device 10 connects to the sink device 20 using a Wi-Fi service to transmit a share image to the sink device 20. However, aspects of the invention are not limited thereto, such that transmission of the share image to the sink device 20 to share a version of an image of the source device 10 is not limited to the use of the Wi-Fi service. For example, wired communication through a data cable as well as wireless communication, such as Bluetooth®, a mobile communication network (e.g., Global System for Mobile Communications (GSM), Long Term Evolution (LTE)), and the like may be used.

In operation 102, the source device 10 provides an UI to the user to decide whether to configure image layers associated with a main image of the source device 10 for selective image transmission. In operation 104, if the user selects to configure the image layers for transmitting the selective image, image layers except for the image layers selected according to the input of the user or a non-display image layer is configured. In operation 106, the image layers except for the non-display image layer may be synthesized to generate a share image, which may be is transmitted to the share buffer generating unit 13b. In operation 108, the capture unit 15 may capture the generated share image stored in the share image buffer generating unit 13b, and may transmit the share image to the encoding unit 16. In operation 110, the encoding unit 16 may encode the share image to generate an appropriate share image data, such as a MPEG video data. In operation 114, when the encoding operation is completed, the control unit 14 may transmit the generated share image data to the sink device 20 through the communication unit 17, and the sink device 20 may decode the received share image data and display the share image data on the screen.

If the user selects not to configure the image layers for generating a share image in operation 102, an image window including all of the image layers is configured in operation 116. In operation 118, all of the image layers may be synthesized to generate a main image, and the generated main image may be transmitted to a main buffer generating unit 13a for storage. In operation 120, the capture unit 15 may capture the main image generated as described above, and transmits the main image to the encoding unit 16 to perform operation 110 and the control unit 14 to perform operation 122.

In operation 122, the control unit 14 may display or provide the received main image on the display device of the source device 10. Further, the control unit may provide the main image on the display device without separate encoding. In operation 110, the encoding unit 16 may encode the received main image to generate an appropriate main image data, such as MPEG video data. In operation 112, the encoding unit 16 may transmit the share image to the sink device 20. In operation 114, the sink device 20 may receive, decode, and display the main data.

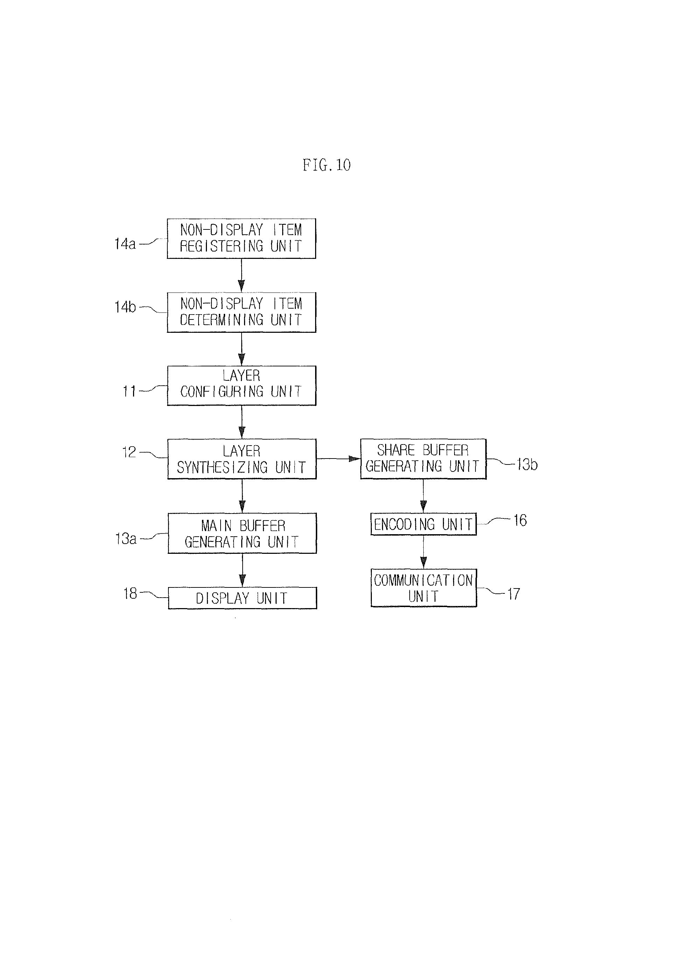

FIG. 10 is a flowchart illustrating a method for generating the main image and the share image of the source device 10 according to an exemplary embodiment of the present invention.

Referring to FIG. 10, the method for generating the main image and the share image will be described as follows. When the non-display item is determined or selected using the non-display item registering unit 14a, the non-display item determining unit 14b may search image data associated with an image of the source device 10 included in the layer configuring unit 11 to determine whether one of the image layers includes the non-display item, generate a main image and a share image using the layer synthesizing unit 12, and store the main image in the main buffer generating unit 13a and the share image in the share buffer generating unit 13b. When the main image and the share image are generated and stored as described above, the main image may be transmitted to the display unit 18 to be displayed on the display unit 18 of the source device 10, and the share image may be encoded through the encoding unit 15 and may be transmitted to the sink device 20 through the communication unit 17.

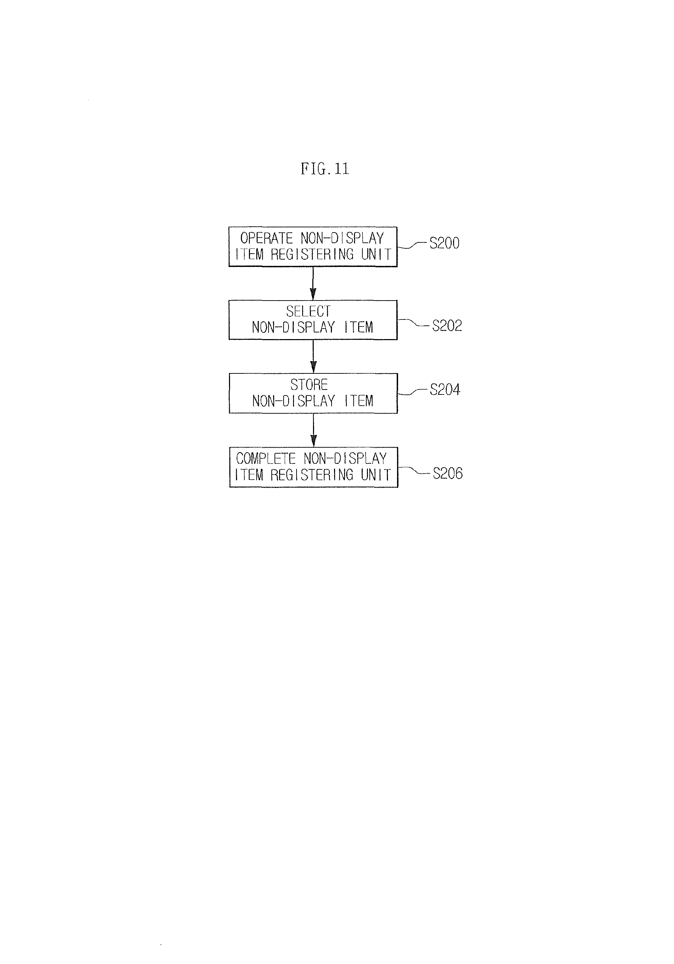

FIG. 11 is a flowchart illustrating a method for registering a non-display item according to an exemplary embodiment of the present invention. The method of FIG. 11 below will be described as if performed by a non-display item registering unit 14a of the source device 10 of FIG. 5, but is not limited thereto.

In operation 200, when the non-display item registering unit 14a is operated, the UI may be provided for the user to select one or more non-display items from an image displayed on the display unit 18. Further, the non-display item registering unit 14a may automatically register a non-display item based on a predetermined condition (e.g., all text messages, any information provided by an email program, and the like). In operation 202, the user selects the non-display item (S202). In operation 204, the selected non-display item is stored in the non-display item registering unit 14a. In operation 206, the operation of the non-display item registering unit 14a is completed.

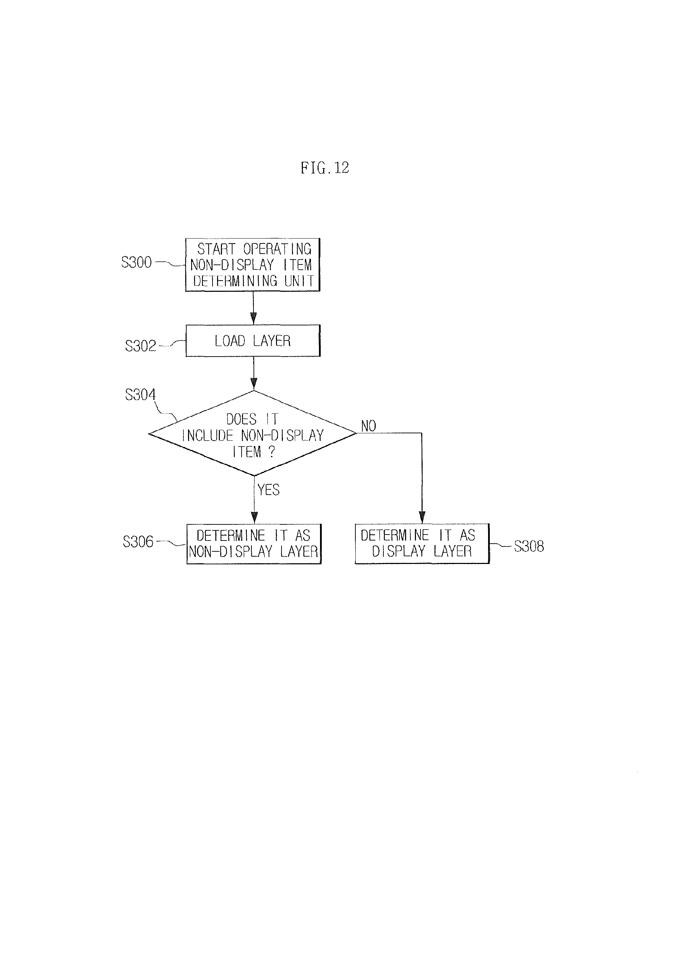

FIG. 12 is a flowchart illustrating a method for distinguishing a display layer from a non-display image layer in a source device according to an exemplary embodiment of the present invention. The method of FIG. 9 below will be described as if performed by the sink device 10 of FIG. 5, but is not limited thereto.

In operation 300, when the non-display item is registered by the non-display item registering unit 14a, the operation of the non-display item determining unit 14b is started. In operation 302, one or more image layers corresponding to an image provided by the source device 10 are loaded (S302). In operation 304, it is determined whether the loaded image layers include the registered non-display item.

In operation 306, when it is determined that one of the loaded image layer includes the non-display item, the layer including the non-display item is determined as a non-display image layer. In operation 308, when it is determined that the loaded image layer does not include the non-display item, the loaded image layer is determined as a display image layer. These operations may be repeated for each image layer included in the loaded image layers. The control unit 14 may classify the loaded image layers to be configured based on the results of method of FIG. 12.

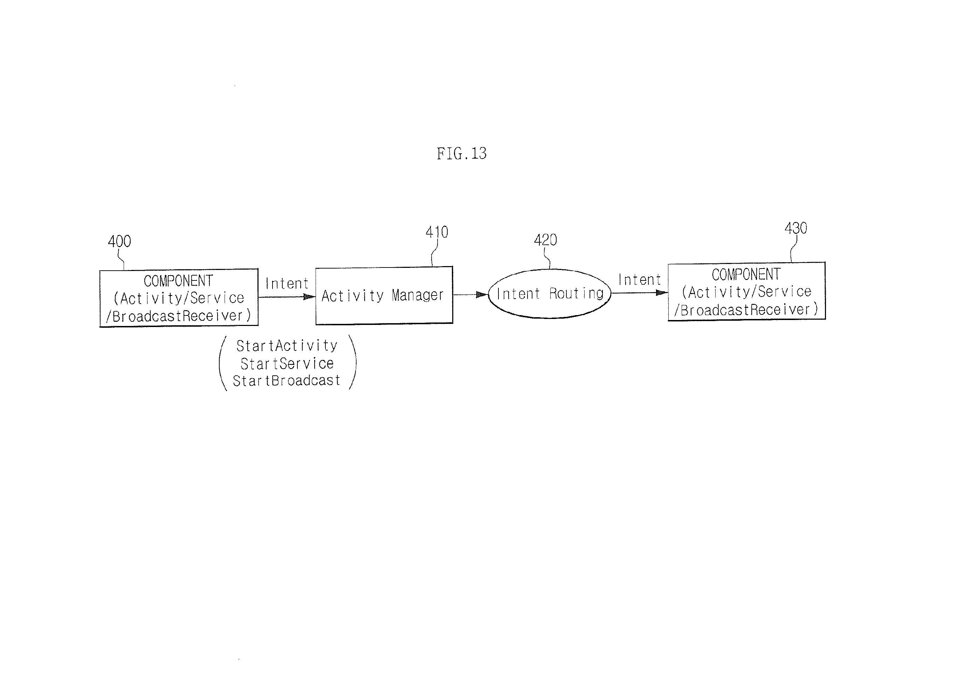

FIG. 13 is a flow diagram illustrating a method for classifying an image layer as a non-display image layer of the source device 10 according to an exemplary embodiment of the present invention.

In the related art, a method in which the user directly and manually selects the non-display window is used. However, according to aspects of the present invention, category items stored in a registered reference table may be searched to be automatically processed.

FIG. 13 shows an intent process mechanism in a framework stage. Some or all of the intents occurring on the android® platform may be preferentially transmitted to an activity manager. Accordingly, it may be possible to determine whether or not the activity is associated with a non-display item or image layer using a registered reference table including a category registered as a non-display item or image layer. By determining whether or not the activity is associated with the non-display item or image layer with the operation of the activity manager. Whether an activity is associated with the non-display item or image layer or a display item or image layer may be determined for one or more applications in the source device 10.

Further, a share attribute associated with a non-display item or image layer may be added to the registered reference table storing information associated with an activity or the application provided by the source device 10. The share attribute may be quarried from the activity manager to determine whether the activity or application is associated with the non-display item, or the display item is determined. A method for determining whether an activity or an application is associated with the non-display item or image layer may be based on a share attribute associated with the non-display item or image layer as information to be stored in the registered reference table.

Referring to FIG. 13, when an intent data of the Android® platform is generated in component 400, the intent data is transmitted to the activity manager 410. The activity manager 410 transmits the intent data to a designated component 430 through an intent routing 420. Terms on the Android® platform shown in FIG. 13 will be described more in detail below.

The intent data is a type of message used to select and use a component of a specific application in the Android® platform. The intent data may be classified into a clear intent and an implicative intent. The clear intent may refer to an intent that specifically identifies a call target of a specific application to be processed. The implicative intent may refer to an intent in which a call target may not be specifically identified, where only characteristics to the call target are set. The application may determine whether the message can be processed by the application using an intent filter provided in the application when the message including intent data is transmitted, and the application processes the message.

The activity may refer to an image or information displayed on the Android® platform. For example, one application may have a plurality of images or information that may be displayed. Accordingly, one or more applications may include a plurality of activities, and the activity may be one of the components included in the application executed on the Android® platform.

The service may refer to one of Android® components which may not displayed on a screen of a source terminal and may be executed on a background. The broadcast receiver may refer to a receiver that catches a message when one or more messages are propagated like broadcasting. Such messages may include, a message including information relating to a state of a system (e.g., a battery state or the like), or a message associated with an application.

The intent routing may refer to a process of connecting the intent data with the intent filter. The intent filter may determine whether the intent data may be allowed to pass according to an attribute of the intent data. Further, the intent filter may classify intent data by connecting the received intent data with the intent filter.

Referring back to FIG. 7 again, the surface flinger may update the image data stored in the frame buffer, and the activity manager may generalize the overall operation of the application. Some or all of the intents data generated on the Android® platform may preferentially be transmitted to the activity manager service. The activity manager may receive the intent data, ask a package manager service to determine a component that may be suitable for the intent data, and transmit the intent data to a target component based on the determination. The activity manager service may manage some or all of the state information associated with one or more packages activated by adding the state information associated with the operating components. Accordingly, it may be possible to confirm the current state of the target component.

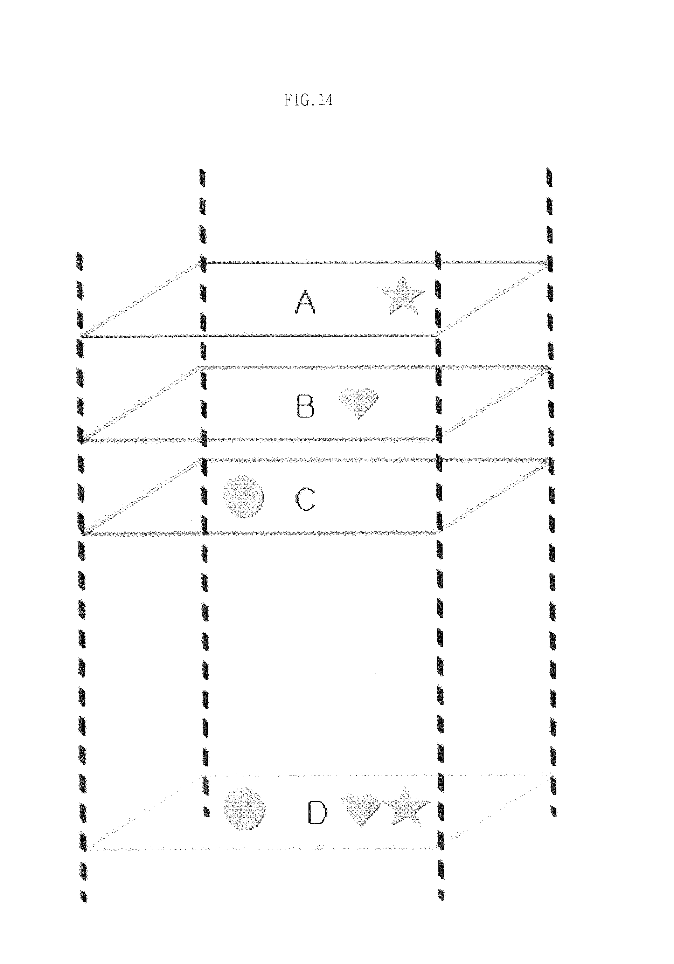

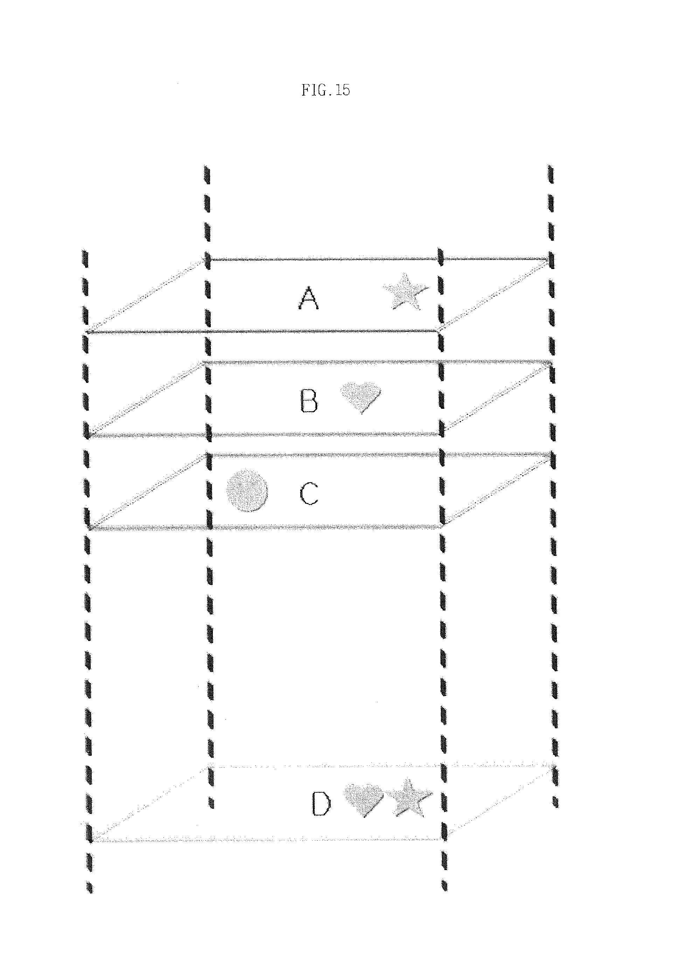

FIG. 14 is a concept diagram illustrating items included in a plurality of image layers that are used to generate a main image according to an exemplary embodiment of the present invention. FIG. 15 is a concept diagram illustrating items included in a plurality of image layers that are used to generate a main image according to an exemplary embodiment of the present invention.

FIG. 14 shows three image layers, including an image layer A, an image layer B, and an image layer C, which may all belong to the display layer. None of the three image layers may include a non-display item to generate a non-display image layer. The three image layers may be synthesized or combined to generate a main image D.

FIG. 15 shows three image layers, including an image layer A, an image layer B, and an image layer C, in which the image layer C may be determined to include a non-display item. Accordingly, the image layer C may be classified into the non-display image layer. All of the image layers except for the image layer C may be synthesized or combined to generate a share image D.

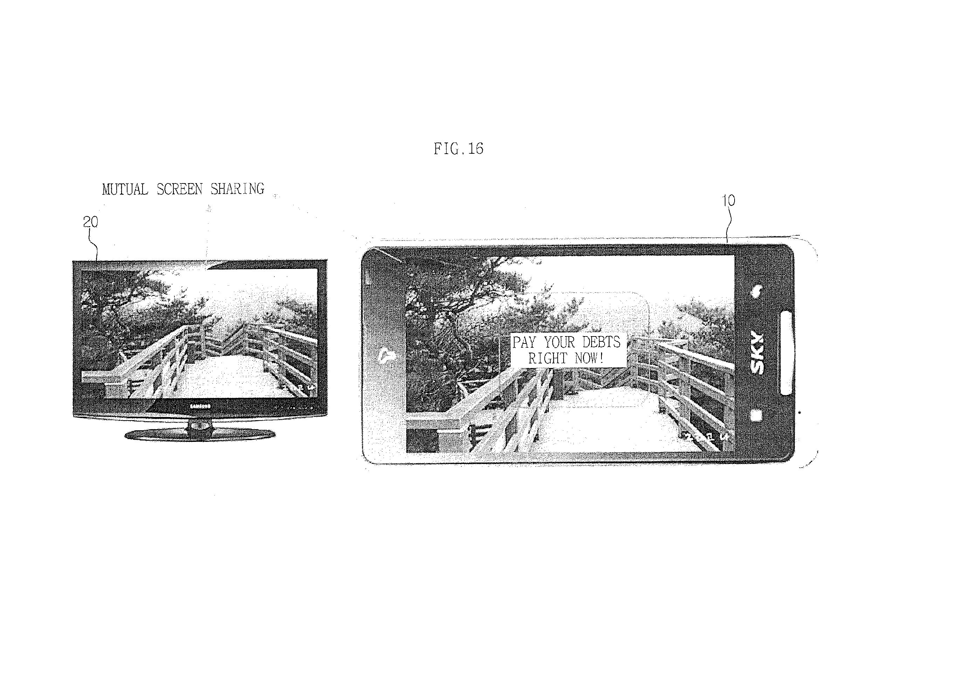

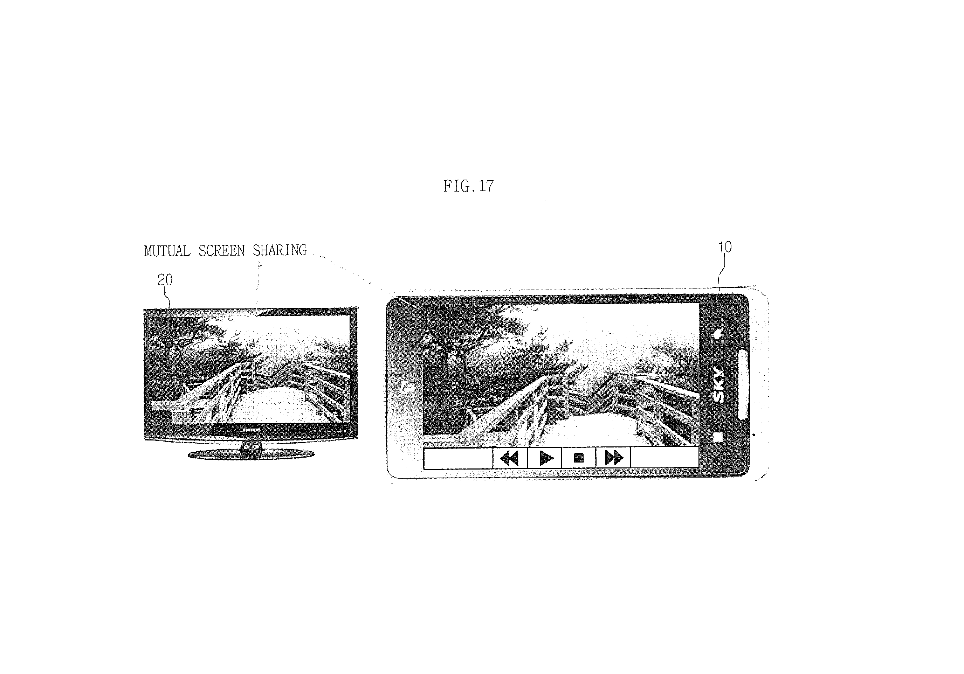

FIG. 16 and FIG. 17 are diagrams illustrating a selective display of different images on a source device and a sink device according to an exemplary embodiment of the present invention. FIG. 16 and FIG. 17 will be described as if performed by the source device 10 and the sink device 20 but are not limited thereto.

Referring to FIG. 16, when the text message popup window of "PAY YOUR DEBTS RIGHT NOW!" is displayed on the source device 10, the text message popup may not be displayed on the sink device 20. An application displaying a movie or an image may be set at a different image layer than the application displaying a text message. When there are multiple applications, where one application displays an image or video and the other application displays the text message. Some or all of the image layers relating to the application displaying the text message may be set so as not to be transmitted to the sink device 20.

Referring to FIG. 17, a control toolbar is displayed at the bottom of an image displayed on the source device 10, but not on the sink device 20. In an example, when the user gives a presentation to many people, only the user of the source device 10 may see and have access to the control toolbar to avoid a potential interference that may be caused by having multiple people access to the presentation. Here, the user may set the control toolbar as a non-display item to avoid transmission of the control toolbar to the sink device 20. FIG. 17 illustrates a case where a specific item of the plurality of items constituting an image of the application is set as the non-display item.

According to exemplary embodiments of the present invention, the non-display item or image layer may be separately set from the plurality of layers constituting an image of the source device 10. The non-display image may be removed from the remaining display layers, and the remaining display layers may be synthesized to generate a share image, which may be stored in the share buffer. The share image may be transmitted from the share buffer to the sink device 20. Accordingly, it may be possible to provide additional privacy when sharing the data with others.

In a method for displaying an image of the source device on the sink device according to exemplary embodiments of the present invention, an image to be displayed on the source device and the image to be transmitted to the sink device may be separately configured. Accordingly, it may be possible to provide the images with others while avoiding sharing of information which is not intended to be distributed to others.

Although exemplary embodiments of the present invention were disclosed with respect to sharing images, aspects of the invention are not limited to a graphical image, such that the image includes, without limitation, at least one of a picture, a moving picture, a text message, a control mechanism, and the like.

Further, according to exemplary embodiments of the present invention, the image layers with an exception of a specific image layer or certain information included in the specific image layer may be shared. As a result, it may be possible to reduce a likelihood of privacy infringement when sharing images provided on the source device with one or more sink devices. [0114] It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for selective image distribution using a processor includes determining whether an image includes a non-display image layer and a display image layer; and generating, using the processor, a share image by synthesizing the display image layer. A device includes a layer configuring unit to determine whether an image includes a non-display image layer and a display image layer, and a layer synthesizing unit to synthesize the display image layer to generate a share image.

## Claims

1. A method for selective image distribution using a processor, comprising:
determining whether an image comprises a non-display image layer and a display image layer; and
generating, using the processor, a share image by synthesizing the display image layer;
wherein the image preferably comprises at least one of a graphic image, a moving picture, a text, data, and a control mechanism.

2. The method of claim 1, further comprising transmitting the share image to a device, wherein the transmitting the share image comprises:
storing the share image in a sharing buffer generating unit;
capturing an instance of the share image; and
encoding the instance of the share image for transmission.

3. The method of claim 1 or 2, further comprising:
generating a main image by synthesizing the display image layer and the non-display image layer.

4. The method of one of claims 1 to 3, wherein an image layer of the image is determined to be the non-display image layer if the image layer is determined to comprise a non-display item.

5. The method of one of claims 1 to 4, wherein an image layer of the image is determined to be the non-display image layer based on a registered table.

6. The method of one of claims 1 to 5, wherein an image layer of the image is determined to be the non-display image layer according to a reference condition.

7. The method of one of claims 1 to 6, further comprising receiving an input for designating an image layer of the image as the non-display image layer.

8. The method of one of claims 1 to 7, wherein the share image comprises only the display image layer among the display image layer and the non-display image layer.

9. A device, comprising:
a layer configuring unit to determine whether an image comprises a non-display image layer and a display image layer; and
a layer synthesizing unit to synthesize the display image layer to generate a share image;
wherein the image preferably comprises at least one of a graphic image, a moving picture, a text, data, and a control mechanism.

10. The device of claim 9, further comprising:
a communication unit to transmit the share image to another device;
a sharing buffer generating unit to store the share image;
a capture unit to capture an instance of the share image; and
an encoding unit to encode the instance of the share image.

11. The device of claim 9 or 10, wherein the layer synthesizing unit generates a main image by synthesizing the display image layer and the non-display image layer.

12. The device of one of claims 9 to 11,
wherein an image layer of the image is determined to be the non-display image layer if the image layer is determined to comprise a non-display item;
or/and
wherein an image layer of the image is determined to be the non-display image layer based on a registered table;
or/and
wherein an image layer of the image is determined to be the non-display image layer according to a reference condition.

13. The device of one of claims 9 to 12,
wherein the layer configuring unit receives an input to designate an image layer of the image as the non-display image layer;
or/and
wherein the share image comprises only the display image layer among the display image layer and the non-display image layer.

14. The device of one of claims 9 to 13, further comprising:
a share buffer generating unit to store the share image; and
a main buffer generating unit to store the main image.

15. A method for selective image distribution using a processor, preferably according to one of claims 1 to 8, comprising:
loading an image provided by a source device as a plurality of image layers;
determining whether the plurality of image layers comprise a non-display item;
registering the image layer comprising the non-display item as a non-display image layer;
synthesizing, using the processor, non-registered image layers for generating a share image; and
transmitting the share image to a sink device.
